# EUROPEAN PATENT APPLICATION

(11) **EP 4 697 410 A1**
(43) Date of publication of application: **18.02.2026**
(21) Application number: 24788447.1
(22) Date of filing: 29.02.2024
(51) Int. Cl.: H01M 4/505, C01G 49/00, C01G 53/00, H01M 4/525, H01M 10/054

(54) **POSITIVE ELECTRODE ACTIVE MATERIAL AND SODIUM ION SECONDARY BATTERY**

(30) Priority: 12.04.2023 JP 2023065094
(71) Applicant: TOYOTA JIDOSHA KABUSHIKI KAISHA, Aichi-ken 471-8571 (JP)
(72) Inventor: YUBUCHI, So, Toyota-shi, Aichi 471-8571 (JP); YOSHIDA, Jun, Toyota-shi, Aichi 471-8571 (JP)
(74) Representative: D Young & Co LLP
(86) International application number: PCT/JP2024/007607
(87) International publication number: WO 2024/214417

(57) **Abstract**

Disclosed is a positive electrode active material having a P2-type structure and having a large reversible capacity. The positive electrode active material of the present disclosure comprises a Na-containing oxide. The Na-containing oxide has a P2-type structure. The Na-containing oxide at least comprises, as constituting elements, at least one element among Mn, Ni, and Co; Na; and O. An X-ray diffraction pattern of the Na-containing oxide satisfies I₁/I₂ ≤ 0.10. The X-ray diffraction pattern of the Na-containing oxide satisfies I₁/I₃ ≤ 0.70. The I₁ is an X-ray diffraction peak intensity originating from (102) plane of the P2-type structure, the I₂ is an X-ray diffraction peak intensity originating from (002) plane of the P2-type structure, and the I₃ is an X-ray diffraction peak intensity originating from (100) plane of the P2-type structure.

## Description

### FIELD

The present application discloses a positive electrode active material and a sodium-ion secondary battery.

### BACKGROUND

PTL 1 and 2 disclose a Na-containing oxide having a P2-type structure and having a predetermined chemical composition. Na-containing oxides having a P2-type structure are used as positive electrode active materials of sodium-ion secondary batteries.

### [CITATION LIST]

### [PATENT LITERATURE]

[PTL 1] Japanese Unexamined Patent Publication (Kokai) No. 2012-201588
[PTL 2] Japanese Unexamined Patent Publication (Kokai) No. 2017-045600

### SUMMARY

### [TECHNICAL PROBLEM]

Conventional positive electrode active materials having a P2-type structure have room for improvement in terms of reversible capacity.

### [SOLUTION TO PROBLEM]

The present application, as a means for achieving the object above, discloses the following plurality of aspects.

### <Aspect 1>

A positive electrode active material, comprising a Na-containing oxide, wherein
the Na-containing oxide has a P2-type structure,
the Na-containing oxide comprises, as constituent elements,
   at least one element among Mn, Ni, and Co;
   Na; and
   O,
an X-ray diffraction pattern of the Na-containing oxide satisfies I₁/I₂ ≤ 0.10,
the X-ray diffraction pattern of the Na-containing oxide satisfies I₁/I₃ ≤ 0.70,
the I₁ is an intensity of an X-ray diffraction peak originating from (102) plane of the P2-type structure,
the I₂ is an intensity of an X-ray diffraction peak originating from (002) plane of the P2-type structure, and
the I₃ is an intensity of an X-ray diffraction peak originating from (100) plane of the P2-type structure.

### <Aspect 2>

The positive electrode active material according to Aspect 1, wherein
the X-ray diffraction pattern of the Na-containing oxide satisfies 0.01 ≤ I₁/I₂ ≤ 0.10, and
the X-ray diffraction pattern of the Na-containing oxide satisfies 0.01 ≤ I₁/I₃ ≤ 0.70.

### <Aspect 3>

The positive electrode active material according to Aspect 1 or 2, wherein
the X-ray diffraction pattern of the Na-containing oxide satisfies 0.40° ≤ HW₁, and
the HW₁ is a half-width of the X-ray diffraction peak originating from the (102) plane of the P2-type structure.

### <Aspect 4>

The positive electrode active material according to Aspect 3, wherein
the X-ray diffraction pattern of the Na-containing oxide satisfies 0.40° ≤ HW₁ ≤ 1.00°.

### <Aspect 5>

The positive electrode active material according to any of Aspects 1 to 4, wherein
the Na-containing oxide has a chemical composition represented by NaₐMnₓ₋ₚNi_{y-q}Co_{z-r}M_{p+q+r}O₂ (where 0 < a ≤ 1.00; x + y + z = 1; and 0 ≤ p + q + r < 0.17, and the element M is at least one selected from B, Mg, Al, K, Ca, Ti, V, Cr, Fe, Cu, Zn, Ga, Ge, Sr, Y, Zr, Nb, Mo, and W).

### <Aspect 6>

The positive electrode active material according to any of Aspects 1 to 5, wherein
the Na-containing oxide comprises, as constituent elements, at least Na, Mn, Ni, Co, and O.

### <Aspect 7>

The positive electrode active material according to any of Aspects 1 to 4, wherein
the Na-containing oxide comprises, as constituent elements, at least Na, Mn, Fe, and O.

### <Aspect 8>

A sodium-ion secondary battery,
comprising a positive electrode active material layer, an electrolyte layer, and a negative electrode active material layer, wherein
the positive electrode active material layer comprises the positive electrode active material according to any of Aspects 1 to 7.

### [ADVANTAGEOUS EFFECTS OF INVENTION]

The positive electrode active material of the present disclosure has a large reversible capacity.

### BRIEF DESCRIPTION OF DRAWINGS

FIG. 1 shows one example of the flow of a manufacturing method for a Na-containing oxide having a P2-type structure.
FIG. 2 schematically shows one example of a configuration of a sodium-ion secondary battery.
FIG. 3 shows the X-ray diffraction pattern of each of Examples 1 to 3 and Comparative Example 1.
FIG. 4 shows the X-ray diffraction pattern of each of Example 4 and Comparative Example 2.

### DESCRIPTION OF EMBODIMENTS

### 1. Positive electrode active material

The positive electrode active material according to the embodiments comprises a Na-containing oxide. The Na-containing oxide has a P2-type structure. The Na-containing oxide at least comprises, as constituent elements, at least one element among Mn, Ni, and Co; Na; and O. An X-ray diffraction pattern of the Na-containing oxide satisfies I₁/I₂ ≤ 0.10. The X-ray diffraction pattern of the Na-containing oxide satisfies I₁/I₃ ≤ 0.70. The I₁ is an X-ray diffraction peak intensity originating from the (102) plane of the P2-type structure. The I₂ is an X-ray diffraction peak intensity originating from the (002) plane of the P2-type structure. The I₃ is an X-ray diffraction peak intensity originating from the (100) plane of the P2-type structure.

### 1.1 Crystal structure

The Na-containing oxide according to the embodiments has at least a P2-type structure (belonging to space group P63mc) as a crystal structure. The Na-containing oxide may have a crystal structure other than a P2-type structure, in addition to having a P2-type structure. Examples of the crystal structure other than a P2-type structure include various crystal structures (such as O2-type structure) that are formed when Na is deintercalated from a P2-type structure. The Na-containing oxide according to the embodiments may have a P2-type structure as the main phase. In the Na-containing oxide, a crystal structure constituting the main phase can change depending on the charging and discharging states.

### 1.1.1 X-ray diffraction peak intensity

The X-ray diffraction pattern of the Na-containing oxide according to the embodiments satisfies I₁/I₂ ≤ 0.10 and I₁/I₃ ≤ 0.70. The I₁ is an X-ray diffraction peak intensity originating from the (102) plane of the P2-type structure, the I₂ is an X-ray diffraction peak intensity originating from the (002) plane of the P2-type structure, and the I₃ is an X-ray diffraction peak intensity originating from the (100) plane of the P2-type structure.

Conventional P2-type positive electrode active materials have a large X-ray diffraction peak intensity originating from the (102) plane, and have excellent crystallinity in all directions, including vertical, horizontal, and oblique directions. The Na-containing oxide according to the embodiments is synthesized under conditions not found in the prior art, whereby the X-ray diffraction peak intensity I₁ originating from the (102) plane is decreased with respect to the X-ray diffraction peak intensity I₂ originating from the (002) plane and the X-ray diffraction peak intensity I₃ originating from the (100) plane. Specifically, in the Na-containing oxide according to the embodiments, the X-ray diffraction peak intensity for the (102) plane in the P2-type structure is decreased, and while the P2-type structure is maintained as a whole, crystallinity in the oblique direction is decreased. According to the findings of the present inventors, the Na-containing oxide having such a P2-type structure has excellent reversible capacity compared to a conventional P2-type positive electrode active material. The low crystallinity of the (102) plane means that stacking faults are introduced into a specific crystal plane of the P2-type crystal structure. In the Na-containing oxide according to the embodiments, it is presumed that the stacking faults have some effect on the increase in reversible capacity of the positive electrode active material.

In an X-ray diffraction pattern of the Na-containing oxide according to the embodiments, the ratio I₁/I₂ of X-ray diffraction peak intensity I₁ originating from the (102) plane of the P2-type structure to X-ray diffraction peak intensity I₂ originating from the (002) plane of the P2-type structure satisfies I₁/I₂ ≤ 0.10. In addition, in the X-ray diffraction pattern of the Na-containing oxide according to the embodiments, the ratio I₁/I₃ of X-ray diffraction peak intensity I₁ originating from the (102) plane of the P2-type structure to X-ray diffraction peak intensity I₃ originating from the (100) plane of the P2-type structure satisfies I₁/I₃ ≤ 0.70. The X-ray diffraction pattern above may satisfy 0.01 ≤ I₁/I₂ ≤ 0.10, 0.02 ≤ I₁/I₂ ≤ 0.10, or 0.03 ≤ I₁/I₂ ≤ 0.10, and 0.01 ≤ I₁/I₃ ≤ 0.70, 0.05 ≤ I₁/I₃ ≤ 0.70, 0.10 ≤ I₁/I₃ ≤ 0.70, 0.15 ≤ I₁/I₃ ≤ 0.70, 0.20 ≤ I₁/I₃ ≤ 0.70, or 0.20 ≤ I₁/I₃ ≤ 0.65.

### 1.1.2 Half-width of X-ray diffraction peak

As described above, the Na-containing oxide according to the embodiments has low crystallinity for the (102) plane of the P2-type structure. For example, the X-ray diffraction pattern of the Na-containing oxide according to the embodiments may satisfy 0.40° ≤ HW₁. The HW₁ is the half-width of the X-ray diffraction peak originating from the (102) plane of the P2-type structure. The half-width HW₁ may satisfy 0.40° ≤ HW₁ ≤ 1.00°, 0.45° ≤ HW₁ ≤ 1.00°, 0.50° ≤ HW₁ ≤ 1.00°, 0.55° ≤ HW₁ ≤ 1.00°, or 0.60° ≤ HW₁ ≤ 1.00°. The half-width of the X-ray diffraction peak originating from the (002) plane and half-width of the X-ray diffraction peak originating from the (100) plane of the P2-type structure are not particularly limited.

### 1.1.3 Measurement method for X-ray diffraction peak intensity and half-width

The "X-ray diffraction pattern of the Na-containing oxide", "X-ray diffraction peak intensity", and "half-width of X-ray diffraction peak" in the present application refer to those acquired under the following conditions. Specifically, an X-ray diffraction pattern is acquired by subjecting the Na-containing oxide to a 2θ/θ scan using an X-ray diffractometer (Rigaku, Automated Multipurpose X-ray Diffractometer SmartLab), CuKα as the radiation source, and tube voltage of 45 kV, tube current of 200 mA, step size of 0.02°, and scanning speed of 1°/min. In the X-ray diffraction pattern, the X-ray diffraction peak originating from the (102) plane of the P2-type structure typically appears at 38.9°±0.5° (but can vary depending on the transition metal composition and Na amount). The X-ray diffraction peak originating from the (002) plane of the P2-type structure typically appears at 15.9°±0.5° (but can vary depending on the transition metal composition and Na amount). The X-ray diffraction peak originating from the (100) plane of the P2-type structure typically appears at 36°±0.5° (but can vary depending on the transition metal composition and Na amount). After subtracting the background value near the peaks from the X-ray diffraction pattern, the I₁/I₂ and I₁/I₃ above can be determined from the intensity of each of the X-ray diffraction peaks, and the half-width HW₁ of the X-ray diffraction peak originating from (002) plane is also determined.

### 1.1.4 Crystallite

The Na-containing oxide according to one embodiment may be a single crystal consisting of one crystallite, or may be a polycrystal comprising a plurality of crystallites. For example, the Na-containing oxide according to one embodiment may be composed of a plurality of crystallites on the surface thereof. In other words, the Na-containing oxide may have, on the surface thereof, a structure in which the plurality of crystallites are connected to one another. When the surface of the Na-containing oxide is composed of a plurality of crystallites, crystal grain boundaries are present on the surface. The crystal grain boundaries may be entrances and exits for intercalation. Specifically, when the Na-containing oxide is a polycrystal comprising a plurality of crystallites, expected effects include a decrease in reaction resistance due to the increased number of intercalation entrances and exits, a decrease in diffusion resistance due to shortened migration distance of sodium ions, and prevention of cracking due to a decrease in absolute quantities of expansion and contraction amounts during charging and discharging. The size of the crystallites may be large or small. However, it is considered that the smaller the size of the crystallites, the larger the number of crystal grain boundaries, and the more easily the above advantageous effects are exhibited. For example, when the diameter of crystallites constituting the Na-containing oxide is less than 1 µm, higher performance is easily obtained. Note that the "crystallite" and "crystallite diameter" can be determined by observing the surface of the Na-containing oxide with a scanning electron microscope (SEM) or a transmission electron microscope (TEM). Specifically, when a surface of a Na-containing oxide is observed and a closed region surrounded by crystal grain boundaries is observed, the region is regarded as a "crystallite". The maximum Feret diameter of the crystallite is determined, and this is regarded as the "crystallite diameter". If the Na-containing oxide consists of a single crystal, the particle itself can be considered a crystallite, and the maximum Feret diameter of the particle is the "crystallite diameter". Alternatively, the crystallite diameter can be determined with EBSD or XRD. For example, the crystallite diameter can be determined based on the Scherrer equation from the half-width of the diffraction line of the XRD pattern. In the Na-containing oxide, when the crystallite diameter specified by any of the methods is less than 1 µm, higher performance is easily obtained. A crystallite constituting the Na-containing oxide may have a first surface exposed on the surface of the oxide, and the first surface may be planar. Specifically, the surface of the Na-containing oxide may have a structure in which a plurality of planes are connected. As described below, when manufacturing a Na-containing oxide, crystallites having a planar first surface are easily obtained by growing crystallites on a surface of a particle until one crystallite and another crystallite are connected to one another.

### 1.2 Chemical composition

The Na-containing oxide according to one embodiment at least comprises, as constituent elements, at least one element among Mn, Ni, and Co; Na; and O. In the Na-containing oxide, particularly when at least Na, Mn, one or both of Ni and Co, and O are included as constituent elements, especially when at least Na, Mn, Ni, Co, and O are included as constituent elements, higher performance is easily obtained. Alternatively, when the Na-containing oxide comprises, as constituent elements, at least Na, Mn, Fe, and O, higher performance is easily obtained.

In one embodiment, the Na-containing oxide having a P2-type structure may have a chemical composition represented by NaₐMnₓ₋ₚNi_{y-q}Co_{z-r}M_{p+q+r}O₂ (where 0 < a ≤ 1.00; x + y + z = 1; and 0 ≤ p + q + r < 0.17, and the element M is at least one selected from B, Mg, Al, K, Ca, Ti, V, Cr, Fe, Cu, Zn, Ga, Ge, Sr, Y, Zr, Nb, Mo, and W). When the Na-containing oxide has such a chemical composition, a P2-type structure is easily maintained. In the chemical composition above, a is greater than 0 and may be 0.10 or greater, 0.20 or greater, 0.30 or greater, 0.40 or greater, 0.50 or greater, or 0.60 or greater, and is 1.00 or less and may be 0.90 or less, 0.80 or less, or 0.70 or less. In addition, x is 0 or greater and may be 0.10 or greater, 0.20 or greater, 0.30 or greater, 0.40 or greater, or 0.50 or greater, and is 1.00 or less and may be 0.90 or less, 0.80 or less, 0.70 or less, 0.60 or less, or 0.50 or less. Further, y is 0 or greater and may be 0.10 or greater, or 0.20 or greater, and is 1.00 or less and may be 0.90 or less, 0.80 or less, 0.70 or less, 0.60 or less, 0.50 or less, 0.40 or less, 0.30 or less, or 0.20 or less. Moreover, z is 0 or greater and may be 0.10 or greater, 0.20 or greater, or 0.30 or greater, and is 1.00 or less and may be 0.90 or less, 0.80 or less, 0.70 or less, 0.60 or less, 0.50 or less, 0.40 or less, or 0.30 or less. The element M has a small contribution towards charging and discharging. In this regard, in the above chemical composition, by having p + q + r less than 0.17, high charging and discharging capacities are easily ensured. p + q + r may be 0.16 or less, 0.15 or less, 0.14 or less, 0.13 or less, 0.12 or less, 0.11 or less, or 0.10 or less. By including the element M, a P2-type structure is easily stabilized. In the above chemical composition, p + q + r is 0 or greater, and may be 0.01 or greater, 0.02 or greater, 0.03 or greater, 0.04 or greater, 0.05 or greater, 0.06 or greater, 0.07 or greater, 0.08 or greater, 0.09 or greater, or 0.10 or greater. The composition of O is approximately 2, but may be variable without being limited to exactly 2.0.

### 1.3 Shape

The P2-type structure has a hexagonal crystal and a large Na-ion diffusion coefficient, and crystals are easily grown in a specific direction. Particularly, when a transition metal element constituting the P2-type structure includes at least one of Mn, Ni, and Co, tabular crystals are grown easily in a specific direction. Therefore, a Na-containing oxide having a P2-type structure generally forms into tabular particles having a large aspect ratio, wherein crystal growth direction is biased in a specific direction. The Na-containing oxide according to one embodiment may consist of such tabular particles, or may consist of spherical particles. When the Na-containing oxide is a spherical particle, reaction resistance is decreased due to the decrease in crystallite size, and diffusion resistance inside the particle is easily decreased. Further, when applied to a secondary battery, it is considered that the degree of curvature is decreased by spheroidization, and sodium-ion conduction resistance is decreased. As a result, for example, rate characteristics are improved and reversible capacity is easily increased. A "spherical particle" in the present application means a particle having a roundness of 0.80 or greater. The roundness of the spherical particle may be 0.81 or greater, 0.82 or greater, 0.83 or greater, 0.84 or greater, 0.85 or greater, 0.86 or greater, 0.87 or greater, 0.88 or greater, 0.89 or greater, or 0.90 or greater. The roundness of a particle is defined as 4πS/L², where S is the orthographic area of the particle and L is the circumference of an orthographic image of the particle. The roundness of a particle can be determined by observing the exterior of the particle with a scanning electron microscope (SEM), a transmission electron microscope (TEM), or an optical microscope. In the case where the oxide consists a plurality of particles, the roundness thereof is measured as an average value, for example, as follows.
(1) The particle distribution of the particles is first measured. Specifically, a 10% cumulative particle size (D10) and a 90% cumulative particle size (D90) in a volume-based particle size distribution are determined by a laser diffraction/scattering method.
(2) Image observation of the exterior of the particles measured for particle distribution is carried out with a SEM, TEM, or optical microscope, and of the particles contained in the image, 100 particles having an equivalent circle diameter (diameter of a circle having the same area as the orthographic area of the particles) of D10 or more and D90 or less, which are determined in (1), are arbitrarily extracted.
(3) The roundness of each of the 100 extracted particles is determined by image processing, and the average value thereof is regarding as the "roundness of the particles".

The Na-containing oxide according to one embodiment may be a solid particle, may be a hollow particle, or may be a particle having a void. The size of the Na-containing oxide particle is not particularly limited. However, a smaller size is considered advantageous. For example, the average particle size (D50) of the Na-containing oxide particles may be 0.1 µm or more and 10 µm or less, 1.0 µm or more and 8.0 µm or less, or 2.0 µm or more and 6.0 µm or less. The average particle size (D50) is the 50% cumulative particle size (D50, median diameter) in a volume-based particle size distribution determined by a laser diffraction/scattering method.

### 1.4 Others

As described above, the positive electrode active material according to the embodiments has excellent reversible capacity by comprising the above specific Na-containing oxide. As described above, in the Na-containing oxide, stacking faults are introduced into a specific crystal plane, and there is a possibility that the stacking faults have led to an improvement in reversible capacity. The positive electrode active material according to the embodiments may consist only of the above Na-containing oxide, or may comprise the above Na-containing oxide and another positive electrode active material (additional positive electrode active material). From the viewpoint of further increasing the above effect, the proportion of the additional positive electrode active material to the entire positive electrode active material may be a small amount. For example, when the entirety of the positive electrode active material is 100% by mass, the content of the above Na-containing oxide may be 50% by mass or more and 100% by mass or less, 60% by mass or more and 100% by mass or less, 70% by mass or more and 100% by mass or less, 80% by mass or more and 100% by mass or less, 90% by mass or more and 100% by mass or less, 95% by mass or more and 100% by mass or less, or 99% by mass or more and 100% by mass or less.

### 2. Manufacturing method for positive electrode active material

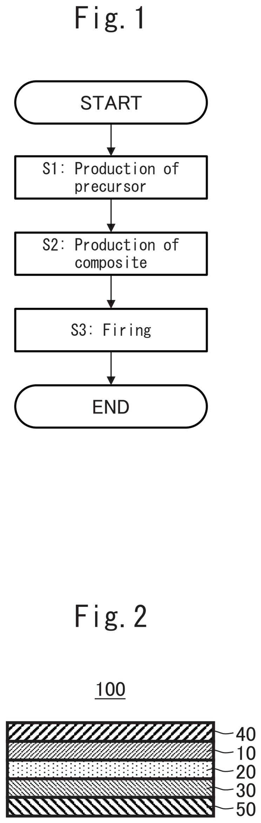

The Na-containing oxide according to the above embodiment can be manufactured, for example, by the following method. As shown in FIG. 1, the manufacturing method for the Na-containing oxide having a P2-type structure according to one embodiment comprises
S1: obtaining a precursor comprising at least one element among Mn, Ni, and Co,
S2: covering a surface of the precursor with a Na source to obtain a composite, and
S3: firing the composite to obtain a Na-containing oxide having a P2-type structure.
The S3 comprises
S3-1: subjecting the composite to a pre-firing at a temperature of 300°C or higher and lower than 700°C for 2 h or more and 10 h or less,
S3-2: following the pre-firing, subjecting the composite to a main firing at a temperature of 700°C or higher and 1100°C or lower for 30 min or more and 48 h or less, and
S3-3: following the main firing, rapidly cooling the composite from a temperature T₁ of 200°C or higher to a temperature T₂ of 100°C or lower.

### 2.1 S1

In S1, a precursor comprising at least one element among Mn, Ni, and Co is obtained. The precursor may at least comprise Mn and one or both of Ni and Co, or may at least comprise Mn, Ni, and Co. The precursor may be a salt comprising at least one element among Mn, Ni, and Co. For example, the precursor may be at least one of a carbonate, a sulfate, a nitrate, and an acetate. Alternatively, the precursor may be a compound other than a salt. For example, the precursor may be a hydroxide. The precursor may be a hydrate. The precursor may be a combination of a plurality of types of compounds. The precursor may be of any of various shapes. For example, the precursor may be particulate, or may be spherical as described below. The particle diameter of the particles consisting of the precursor is not particularly limited.

In S1, a precipitate as the above precursor may be obtained by a coprecipitation method using an ion source that can form a precipitation with a transition metal ion in an aqueous solution and a transition metal compound comprising at least one element among Mn, Ni, and Co. As a result, spherical particles as the precursor are easily obtained. The "ion source that can form a precipitation with a transition metal ion in an aqueous solution", for example, may be at least one selected from sodium salts such as sodium carbonate and sodium nitrate, sodium hydroxide, and sodium oxide. The transition metal compound may be a salt or hydroxide described above comprising at least one element among Mn, Ni, and Co. Specifically, in S1, the ion source and the transition metal compound may each be formed into a solution, and the solutions may then be dropped and mixed to obtain a precipitate as a precursor. In this case, for example, water is used as a solvent. In this case, various sodium compounds may be used as a base, and an ammonia aqueous solution may be added to adjust basicity. In the case of a coprecipitation method, the precipitate is obtained, for example, by preparing an aqueous solution of a transition metal compound and an aqueous solution of sodium carbonate and dropping to mix the aqueous solutions to obtain a precipitate as a precursor. Alternatively, the precursor can be obtained by a sol-gel method. Particularly, according to a coprecipitation method, spherical particles as a precursor are easily obtained.

In S1, a precursor may comprise an element M. The element M is at least one selected from B, Mg, Al, K, Ca, Ti, V, Cr, Cu, Zn, Ga, Ge, Sr, Y, Zr, Nb, Mo, and W. These elements M, for example, have a function of stabilizing the P2-type structure. The method of obtaining the precursor comprising an element M is not particularly limited. When obtaining the precursor by a coprecipitation method in S1, for example, an aqueous solution of a transition metal compound comprising at least one of Mn, Ni, and Co, an aqueous solution of sodium carbonate, and an aqueous solution of a compound of an element M are prepared and dropped to mix the solutions to obtain a precursor comprising the element M and at least one element among Mn, Ni, and Co. Alternatively, in the manufacturing method of the present disclosure, an element M is not added in S1, and doping with the element M may be carried out at the time of Na-doping and firing in S2 and S3 described below.

### 2.2 S2

In S2, a surface of the precursor obtained via S1 is covered with a Na source to obtain a composite. The Na source may be a salt comprising Na, such as a carbonate or a nitrate, or may be a compound other than a salt, such as sodium oxide or sodium hydroxide. In S2, the amount of the Na source covering the surface of the precursor needs only to be determined by taking into account the amount of Na lost during subsequent firing.

In S2, the coverage of the Na source relative to the surface of the precursor is not particularly limited. For example, in S2, the above composite may be obtained by covering 40% by area or more, 50% by area or more, 60% by area or more, or 70% by area or more of the surfaces of the above precursor with a Na source. When the precursor obtained via S1 consists of spherical particles, and the composite obtained via S2 are obtained by covering 40% by area or more of the surface of the precursor with the Na source, a Na-containing oxide having a P2-type structure tends to form spherical particles in S3 described below. When the coverage of the Na source is small, P2-type crystals tend to grow abnormally on the surface of the composite when the composite is fired, and the Na-containing oxide tends to form tabular particles. When the coverage of the Na source is large, crystallites of P2-type crystals tend to be small when the composite is fired, and the Na-containing oxide tends to form spherical particles, which correspond to the shape of the precursor.

In S2, the method of covering the surface of the precursor with a Na source is not particularly limited. As described above, when covering 40% by area or more of the surface of the precursor with a Na source, the method includes various methods. Examples include a rolling fluidized coating method or a spray drying method. Specifically, a coating solution in which a Na source is dissolved is prepared, the coating solution is brought into contact with the surface of the precursor, and is simultaneously or subsequently dried. By adjusting the conditions (such as temperature, time, and count) of coating, for example, 40% by area or more of the surface of the precursor can be covered with a Na source.

In S2, the precursor may be covered with a Na source and an M source. For example, in S2, the precursor obtained via S1, a Na source, and an M source comprising at least one element M selected from B, Mg, Al, K, Ca, Ti, V, Cr, Cu, Zn, Ga, Ge, Sr, Y, Zr, Nb, Mo, and W may be mixed to obtain a composite. The M source, for example, may be a salt comprising an element M, such as a carbonate or a sulfate, or may be a compound other than a salt, such as an oxide or a hydroxide. The amount of the M source relative to the precursor is determined in accordance with the chemical composition of the Na-containing oxide after firing.

### 2.3 S3

In S3, the composite obtained via S2 is fired to obtain a Na-containing oxide having a P2-type structure. S3 comprises the above S3-1, S3-2, and S3-3.

### 2.3.1 S3-1

In S3-1, the composite is subjected to a pre-firing at a temperature of 300°C or higher and lower than 700°C for 2 h or more and 10 h or less. In S3-1, the pre-firing may be carried out after optionally molding the above composite. The pre-firing is carried out at a temperature lower than that of main firing. When the pre-firing in S3-1 is insufficient, the formation of a P2 phase may be insufficient in the resulting Na-containing oxide in the end. By setting the pre-firing temperature to 300°C or higher and lower than 700°C and the pre-firing time to 2 h or more and 10 h or less in S3-1, the composite can be subjected to a sufficient pre-firing, and the X-ray diffraction pattern of the Na-containing oxide having a P2-type structure obtained via S3-2 and S3-3 described below tends to satisfy the above I₁/I₂ and I₁/I₃. The pre-firing temperature may be 400°C or higher and lower than 700°C, 450°C or higher and lower than 700°C, 500°C or higher and lower than 700°C, 550°C or higher and lower than 700°C, or 550°C or higher and 650°C or lower. The pre-firing time may be 2 h or more and 8 h or less, 3 h or more and 8 h or less, 4 h or more and 8 h or less, 5 h or more and 8 h or less, or 5 h or more and 7 h or less. The pre-firing atmosphere is not particularly limited, and for example, may be an oxygen-containing atmosphere.

### 2.3.2 S3-2

In S3-2, following the above pre-firing, the composite is subjected to a main firing at a temperature of 700°C or higher and 1100°C or lower for 30 min or more and 10 h or less. In S3-2, the main firing temperature of the composite is 700°C or higher and 1100°C or lower, and is preferably 800°C or higher and 1000°C or lower. When the main firing temperature is too low, a P2 phase is not formed, and when the main firing temperature is too high, an O3 phase, not a P2 phase, is easily formed. The heating conditions from the pre-firing temperature to the main firing temperature is not particularly limited. The main firing time is not particularly limited, and for example, may be 30 min or more and 48 h or less. The shape of the Na-containing oxide can be controlled by the main firing time. As described above, when the coverage of the Na source on the composite is 40% by area or more in the method of the present disclosure, P2-type crystals having small crystallites are easily formed when the composite is fired. In the method of the present disclosure, by connecting one P2-type crystallite and another P2-type crystallite to one another and growing the P2-type crystals along the surface of a particle, the shape of the Na-containing oxide corresponds to the shape of the precursor. For example, when the precursor consists of spherical particles, the Na-containing oxide can also form spherical particles. When the main firing time is too short, formation of the P2 phase is insufficient. When the main firing time is too long, the P2 phase is excessively grown, and tabular particles, not spherical particles, are formed. As far as the present inventors have confirmed, when the main firing time is 30 min or more and 3 h or less, spherical particles of the Na-containing oxide are easily obtained. The resulting Na-containing oxide after the main firing may have a plurality of crystallites present on the surface thereof and may have a structure in which crystallites are connected.

### 2.3.3 S3-3

In S3-3, following the above main firing, the composite undergoes rapid cooling (cooled at a cooling rate of 20°C/min or higher) from a temperature T₁ of 200°C or higher to a temperature T₂ of 100°C or lower. The above pre-firing and main firing are carried out, for example, in a heating furnace. In step S3-3, for example, the composite is subjected to a main firing in a heating furnace and then cooled to an arbitrary temperature T₁ of 200°C or higher in the heating furnace, and after reaching the temperature T₁, the fired product is removed from the heating furnace and undergoes rapid cooling outside the furnace to an arbitrary temperature T₂ of 100°C or lower. The temperature T₁ is an arbitrary temperature of 200°C or higher, and may be an arbitrary temperature of 250°C or higher. The temperature T₂ is an arbitrary temperature of 100°C or lower, and may be an arbitrary temperature of 50°C or lower or may be the cooling end temperature. In a predetermined temperature range from the temperature T₁ until reaching the temperature T₂, moisture easily infiltrates between layers of a P2-type structure by atomic vibrations or molecular motion. When cooling the composite (Na-containing oxide having a P2-type structure) after main firing, by shortening the time in the temperature range in which such moisture easily infiltrates (i.e., rapid cooling), it is considered that the infiltration amount of moisture between layers of the P2-type structure is decreased. In step S3-3, when cooling the composite after the main firing, by leaving the composite to cool from an arbitrary temperature T₁ of 200°C or higher until reaching an arbitrary temperature T₂ of 100°C or lower in a dry atmosphere outside the furnace, the cooling rate from the temperature T₁ to the temperature T₂ is rapid (for example, 20°C/min or higher), moisture does not easily infiltrate between layers of the P2-type structure, and collapse of the P2-type structure can be inhibited. As a result, the X-ray diffraction pattern of the Na-containing oxide having a P2-type structure obtained via S3-3 tends to satisfy the above I₁/I₂ and I₁/I₃.

According to the foregoing method, a Na-containing oxide that has a P2-type structure, has a predetermined chemical composition, and satisfies the requirements of I₁/I₂ and I₁/I₃ above can be manufactured.

### 3. Sodium-ion secondary battery

The positive electrode active material according to the embodiment comprises the above specific Na-containing oxide. The positive electrode active material, for example, can be used as a positive electrode active material of a sodium-ion secondary battery. FIG. 2 schematically shows a configuration of a sodium-ion secondary battery according to one embodiment. As shown in FIG. 2, the sodium-ion secondary battery 100 according to one embodiment comprises a positive electrode active material layer 10, an electrolyte layer 20, and a negative electrode active material layer 30, wherein the positive electrode active material layer 10 comprises the positive electrode active material according to the above embodiment.

### 3.1 Positive electrode active material layer

The positive electrode active material layer 10 comprises at least the positive electrode active material according to the above embodiment, and may further optionally comprise an electrolyte, a conductive aid, and a binder. Further, the positive electrode active material layer 10 may additionally comprise various additives. The contents of the positive electrode active material, electrolyte, conductive aid, and binder in the positive electrode active material layer 10 need only to be appropriately determined in accordance with the target battery performance. For example, when the entirety (entire solid content) of the positive electrode active material layer 10 is 100% by mass, the content of the positive electrode active material may be 40% by mass or more, 50% by mass or more, or 60% by mass or more, and may be 100% by mass or less or 90% by mass or less. The shape of the positive electrode active material layer 10 is not particularly limited, and for example, may be a sheet-like positive electrode active material layer 10 having a substantially flat surface. The thickness of the positive electrode active material layer 10 is not particularly limited, and for example, may be 0.1 µm or more or 1 µm or more, and may be 2 mm or less or 1 mm or less.

### 3.1.1 Positive electrode active material

The positive electrode active material is as described above. Specifically, the positive electrode active material comprises a Na-containing oxide, and the Na-containing oxide has a P2-type structure, at least comprises, as constituent elements, at least one element among Mn, Ni, and Co; Na; and O, and satisfies the relationships according to I₁/I₂ and I₁/I₃. As described above, the positive electrode active material may consist only of the above Na-containing oxide, or may comprise the above Na-containing oxide and another positive electrode active material (an additional positive electrode active material). From the viewpoint of further enhancing the effect according to the technique of the present disclosure, the ratio of the additional positive electrode active material to the entirety of the positive electrode active materials may be small. For example, when the entirety of the positive electrode active materials is 100% by mass, the content of the above Na-containing oxide is 50% by mass or more and 100% by mass or less, 60% by mass or more and 100% by mass or less, 70% by mass or more and 100% by mass or less, 80% by mass or more and 100% by mass or less, 90% by mass or more and 100% by mass or less, 95% by mass or more and 100% by mass or less, or 99% by mass or more and 100% by mass or less.

### 3.1.2 Electrolyte

The electrolyte that can be contained in the positive electrode active material layer 10 may be a solid electrolyte, may be a liquid electrolyte (electrolytic solution), or may be a combination thereof. The solid electrolyte needs only to be a known solid electrolyte for sodium-ion secondary batteries. The solid electrolyte may be an inorganic solid electrolyte, or may be an organic polymer electrolyte. Particularly, an inorganic solid electrolyte has excellent ion-conducting properties and heat resistance. Examples of the inorganic solid electrolyte include at least one selected from oxides such as Na₃Zr₂PSi₂O₁₂ and Na₂O-11Al₂O₃; hydrides and borides such as NaBH₄, NaB₁₀H₁₀, NaCB₉H₁₀, NaCB₁₁H₁₂, and NaB₁₂Cl₁₂; sulfides such as Na₃PS₄, Na₃SbS₄, and Na_{2.88}Sb_{0.88}W_{0.12}S₄; and fluorides such as NaPF₆ and NaBF₄. The solid electrolyte, for example, may be particulate. The solid electrolyte may be of one type used alone, or may be of two or more types used in combination. The electrolytic solution, for example, can comprise sodium ions as carrier ions. The electrolytic solution may be an aqueous electrolytic solution or a nonaqueous electrolytic solution. The composition of the electrolytic solution needs only to be the same as one known as a composition of an electrolytic solution for sodium-ion secondary batteries. For example, a sodium salt dissolved at a predetermined concentration in a carbonate-based solvent can be used as the electrolytic solution. Examples of the carbonate-based solvent include fluoroethylene carbonate (FEC), ethylene carbonate (EC), diethyl carbonate (DEC), and dimethyl carbonate (DMC). Examples of the sodium salt include NaPF₆.

### 3.1.3 Conductive aid

Examples of the conductive aid that can be contained in the positive electrode active material layer 10 include carbon materials such as vapor-grown carbon fiber (VGCF), acetylene black (AB), Ketjenblack (KB), carbon nanotube (CNT), and carbon nanofiber (CNF); and metal materials such as nickel, aluminum, and stainless steel. The conductive aid, for example, may be particulate or fibrous, and the size thereof is not particularly limited. The conductive aid may be of one type used alone, or may be of two or more types used in combination.

### 3.1.4 Binder

Examples of the binder that can be contained in the positive electrode active material layer 10 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders. The binder may be of one type used alone, or may be of two or more types used in combination.

### 3.2 Electrolyte layer

The electrolyte layer 20 comprises at least an electrolyte. When the sodium-ion secondary battery 100 is a solid battery (may be a battery comprising a solid electrolyte with a liquid electrolyte partially used in combination, or may be an all-solid battery free of a liquid electrolyte), the electrolyte layer 20 comprises a solid electrolyte, and may further optionally comprise a binder. In this case, the contents of the solid electrolyte and the binder in the electrolyte layer 20 are not particularly limited. When the sodium-ion secondary battery 100 is an electrolytic solution battery, the electrolyte layer 20 comprises an electrolytic solution, and may further comprise a separator for retaining the electrolytic solution and preventing contact between the positive electrode active material layer 10 and the negative electrode active material layer 30. The thickness of the electrolyte layer 20 is not particularly limited, and for example, may be 0.1 µm or more or 1 µm or more, and may be 2 mm or less or 1 mm or less.

The electrolyte contained in the electrolyte layer 20 needs only to be appropriately selected from among ones exemplified as an electrolyte that can be contained in the positive electrode active material layer 10 described above. The binder that can be contained in the electrolyte layer 20 needs only to be appropriately selected from among ones exemplified as a binder that can be contained in the positive electrode active material layer 10 described above. The electrolyte and the binder may each be of one type used alone, or may be of two or more types used in combination. The separator needs only to be any separator normally used in sodium-ion secondary batteries. Examples thereof include those made of resins such as polyethylene (PE), polypropylene (PP), polyester, and polyamide. The separator may be of a single-layer structure, or may be of a multilayer structure. Examples of separators having a multilayer structure can include separators of a PE/PP two-layer structure and separators of a PP/PE/PP or PE/PP/PE three-layer structure. The separator may consist of a nonwoven fabric such as cellulose nonwoven fabric, resin nonwoven fabric, or glass-fiber nonwoven fabric.

### 3.3 Negative electrode active material layer

The negative electrode active material layer 30 comprises at least a negative electrode active material, and may optionally comprise an electrolyte, a conductive aid, and a binder. Further, the negative electrode active material layer 30 may additionally comprise various additives. The content of each of the negative electrode active material, electrolyte, conductive aid, and binder in the negative electrode active material layer 30 needs only to be appropriately determined in accordance with the target battery performance. For example, when the entirety (entire solid content) of the negative electrode active material layer 30 is 100% by mass, the content of the negative electrode active material may be 40% by mass or more, 50% by mass or more, or 60% by mass or more, and may be 100% by mass or less or 90% by mass or less. The shape of the negative electrode active material layer 30 is not particularly limited, and for example, may be a sheet having a substantially flat surface. The thickness of the negative electrode active material layer 30 is not particularly limited, and for example, may be 0.1 µm or more or 1 µm or more, and may be 2 mm or less or 1 mm or less.

Various materials having low electric potential (charge and discharge potentials) for storing and releasing sodium ions compared to the above positive electrode active material of the present disclosure can be adopted as the negative electrode active material. The negative electrode active material, for example, may be an inorganic-based negative electrode active material such as metallic sodium, may be a negative electrode active material consisting of an organic compound, or may be a combination thereof. The negative electrode active material may be of one type used alone, or may be of two or more types used in combination. The shape of the negative electrode active material needs only to be any of general shapes of negative electrode active materials of batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 µm or less, 100 µm or less, 50 µm or less, or 30 µm or less. Alternatively, the negative electrode active material may be sheet-like (foil-like or membranous), such as a sodium foil. Specifically, the negative electrode active material layer 30 may consist of a sheet of a negative electrode active material.

Examples of the electrolyte that can be contained in the negative electrode active material layer 30 include the above solid electrolytes and electrolytic solutions, and combinations thereof. Examples of the conductive aid that can be contained in the negative electrode active material layer 30 include the above carbon materials and the above metal materials. The binder that can be contained in the negative electrode active material layer 30 needs only to be appropriately selected, for example, from among ones exemplified as a binder that can be contained in the above positive electrode active material layer 10. The electrolyte and the binder may each be of one type used alone, or may be of two or more types used in combination.

### 3.4 Positive electrode current collector

As shown in FIG. 2, the sodium-ion secondary battery 100 may be provided with a positive electrode current collector 40 in contact with the positive electrode active material layer 10. Any general positive electrode current collector for batteries can be adopted as the positive electrode current collector 40. The positive electrode current collector 40 may be foil-like, laminar, mesh-like, punched metal-like, or a foam. The positive electrode current collector 40 may be composed of a metal foil or a metal mesh. Particularly, a metal foil has excellent handleability. The positive electrode current collector 40 may consist of a plurality of foils. Examples of metals constituting the positive electrode current collector 40 include Cu, Ni, Cr, Au, Pt, Ag, Al, Fe, Ti, Zn, Co, and stainless steel. Particularly, from the viewpoint of ensuring oxidation resistance, the positive electrode current collector 40 may comprise Al. The positive electrode current collector 40 may have on the surface thereof some coating layer for the purpose of adjusting resistance. The positive electrode current collector 40 may be a metal foil or substrate plated or vapor-deposited with a metal described above. When the positive electrode current collector 40 consists of a plurality of metal foils, there may be some layer between the plurality of metal foils. The thickness of the positive electrode current collector 40 is not particularly limited, and for example, may be 0.1 µm or more and 1 µm or more, and may be 1 mm or less or 100 µm or less.

### 3.5 Negative electrode current collector

As shown in FIG. 2, the sodium-ion secondary battery 100 may be provided with a negative electrode current collector 50 in contact with the negative electrode active material layer 30. Any general negative electrode current collector for batteries can be adopted as the negative electrode current collector 50. The negative electrode current collector 50 may be foil-like, laminar, mesh-like, punched metal-like, or a foam. The negative electrode current collector 50 may be a metal foil or a metal mesh, and alternatively, may be a carbon sheet. Particularly, a metal foil has excellent handleability. The negative electrode current collector 50 may consist of a plurality of foils or sheets. Examples of metals constituting the negative electrode current collector 50 include Cu, Ni, Cr, Au, Pt, Ag, Al, Fe, Ti, Zn, Co, and stainless steel. Particularly, from the viewpoint of ensuring reduction resistance, the negative electrode current collector 50 may comprise at least one metal selected from Cu, Ni, and stainless steel. The negative electrode current collector 50 may have on the surface thereof some coating layer for the purpose of adjusting resistance. The negative electrode current collector 50 may be a metal foil or a substrate plated or vapor-deposited with a metal described above. When the negative electrode current collector 50 consists of a plurality of metal foils, there may be some layer between the plurality of metal foils. The thickness of the negative electrode current collector 50 is not particularly limited, and for example, may be 0.1 µm or more or 1 µm or more, and may be 1 mm or less or 100 µm or less.

### 3.6 Additional features

The sodium-ion secondary battery 100, in addition to the above configuration, may be provided with any obvious configuration as a secondary battery, such as tabs or terminals. The above configurations of the sodium-ion secondary battery 100 may each be housed inside an outer packaging. Any known outer packaging can be adopted as the outer packaging of the battery. In addition, a plurality of batteries 100 may be optionally connected electrically and optionally stacked to form a battery pack. In this case, the battery pack may be housed inside a known battery case. The sodium-ion secondary battery 100 may be provided with other obvious configurations such as the necessary terminals. Examples of shapes of the sodium-ion secondary battery 100 can include coin-type, laminate-type, cylindrical, and rectangular.

The sodium-ion secondary battery 100 can be manufactured by applying any known method, except that the above specific positive electrode active material is used, and for example, can be manufactured as follows. However, the manufacturing method for the sodium-ion secondary battery 100 is not limited to the following method. For example, each layer may be formed by dry molding.
(1) A positive electrode active material constituting a positive electrode active material layer is dispersed in a solvent to obtain a positive electrode layer slurry. The solvent used in this case is not particularly limited, and water and various organic solvents can be used. The positive electrode layer slurry is then applied on a surface of a positive electrode current collector using a doctor blade, followed by drying, whereby a positive electrode active material layer is formed on the surface of the positive electrode current collector to obtain a positive electrode.
(2) A negative electrode active material constituting a negative electrode active material layer is dispersed in a solvent to obtain a negative electrode layer slurry. The solvent used in this case is not particularly limited, and water and various organic solvents can be used. The negative electrode layer slurry is then applied on a surface of a negative electrode current collector using a doctor blade, followed by drying, whereby a negative electrode active material layer is formed on the surface of the negative electrode current collector to obtain a negative electrode.
(3) Layers are laminated so that an electrolyte layer (solid electrolyte layer or separator) is interposed between the negative electrode and the positive electrode to obtain a laminated body comprising a negative electrode current collector, a negative electrode active material layer, an electrolyte layer, a positive electrode active material layer, and a positive electrode current collector in this order. Additional members such as terminals are attached to the laminated body as needed.
(4) The laminated body is housed in a battery case. In the case of an electrolytic solution battery, an electrolytic solution is filled into the battery case. The laminated body is immersed in the electrolytic solution and sealed in the battery case, whereby a secondary battery is obtained. Note that, in the case of an electrolytic solution battery, the electrolytic solution may be contained in the negative electrode active material layer, the separator, and the positive electrode active material layer in the above step (3).

### 4. Method of increasing reversible capacity of sodium-ion secondary battery

The technique of the present disclosure also has an aspect of a method of increasing the reversible capacity of a sodium-ion secondary battery. Specifically, the method of increasing the reversible capacity of a sodium-ion secondary battery of the present disclosure is characterized by the use of the positive electrode active material of the present disclosure above in a positive electrode active material layer of the sodium-ion secondary battery.

### 5. Vehicle comprising sodium-ion secondary battery

As stated above, the positive electrode active material of the present disclosure has excellent reversible capacity and is suitable as a positive electrode active material for sodium-ion secondary batteries. As a result, the sodium-ion secondary battery having such a large reversible capacity, for example, can be suitably used in at least one type of vehicle selected from hybrid vehicle (HEV), plug-in hybrid vehicle (PHEV), and electric vehicle (BEV). Specifically, the technique of the present disclosure has an aspect of a vehicle comprising a sodium-ion secondary battery, wherein the sodium-ion secondary battery comprises a positive electrode active material layer, an electrolyte layer, and a negative electrode active material layer, and the positive electrode active material layer comprises the above positive electrode active material of the present disclosure.

### EXAMPLES

As described above, one embodiment for each of the positive electrode active material and the sodium-ion secondary battery has been described. However, various modifications can be made to the above embodiments in a range that does not depart from the spirit of the embodiments. Hereinafter, the technique of the present disclosure will be further described in detail with reference to the Examples. However, the technique of the present disclosure is not limited to the following Examples.

### 1. Production of positive electrode active material

### 1.1 Example 1

### 1.1.1 Production of precursor

(1) MnSO₄·5H₂O, NiSO₄·6H₂O, and CoSO₄·7H₂O were weighed to a target compositional ratio and dissolved in distilled water to a concentration of 1.2 mol/L to obtain a first solution. In a separate container, Na₂CO₃ was dissolved in distilled water to a concentration of 1.2 mol/L to obtain a second solution.
(2) 1000 mL of pure water was loaded into a reactor (with baffles), and 500 mL of the first solution and 500 mL of the second solution were each added therein dropwise at a rate of about 4 mL/min.
(3) Upon completion of the dropwise addition, stirring was carried out at a stirring rate of 150 rpm at room temperature for 1 h to obtain a product.
(4) The product was washed with pure water and subjected to solid-liquid separation with a centrifugal separator to recover a precipitate.
(5) The resulting precipitate was dried overnight at 120°C and crushed with a mortar, fine particles were removed by airflow classification, and precursor particles were obtained. The precursor particles were spherical particles consisting of a composite salt comprising Mn, Ni, and Co and having a roundness of 0.86.

### 1.1.2 Production of composite

(1) Na₂CO₃ and distilled water were weighed to 1150 g/L and then stirred to complete dissolution using a stirrer to produce a Na₂CO₃ aqueous solution.
(2) The above Na₂CO₃ aqueous solution and the above precursor particles were weighed and mixed so as to obtain a composition of Na_{0.7}Mn_{0.5}Ni_{0.2}Co_{0.3}O₂ after the firing described below to obtain a slurry.
(3) The above slurry was airflow-dried by spray drying to obtain a composite. Specifically, using a spray drying apparatus DL410, under the conditions of a slurry feed rate of 30 mL/min, an inlet temperature of 200°C, a circulating air volume of 0.8 m³/min, and a spraying air pressure of 0.3 MPa, the above slurry was airflow-dried and surfaces of the precursor particles were covered with Na₂CO₃ to obtain a composite. In the composite, 77% by area of the surfaces of the precursor particles were covered with Na₂CO₃.

### 1.1.3 Firing of composite

The composite was loaded into an alumina crucible and fired in an ambient air atmosphere to obtain a Na-containing oxide having a P2-type structure. The firing conditions were as described in the following (1) to (7).
(1) An alumina crucible containing the above composite was set in a heating furnace in an ambient air atmosphere.
(2) Temperature inside the heating furnace was raised from room temperature (25°C) to 600°C in 115 min.
(3) Temperature inside the heating furnace was kept at 600°C for 360 min, and pre-firing was carried out.
(4) After pre-firing, temperature inside the heating furnace was raised from 600°C to 950°C in 140 min.
(5) Temperature inside the heating furnace was kept at 950°C for 60 min, and main firing was carried out.
(6) After main firing, temperature inside the heating furnace was lowered from 950°C to 250°C in 140 min.
(7) The alumina crucible was removed from the heating furnace at 250°C, and was left to cool in a dry atmosphere outside the furnace to reach 25°C in 10 min.

The fired product after leaving to cool was crushed in a dry atmosphere using a mortar to obtain Na-containing oxide particles having a P2-type structure.

### 1.2 Example 2

A composite was obtained in the same manner as in Example 1. The obtained composite was loaded into an alumina crucible and fired in an ambient air atmosphere, and the fired product after cooling was crushed in a dry atmosphere to obtain a Na-containing oxide having a P2-type structure. The firing conditions are as stated in the following (1) to (7).
(1) An alumina crucible containing the above composite was set in a heating furnace having an ambient air atmosphere.
(2) Temperature inside the heating furnace was raised from room temperature (25°C) to 600°C in 115 min.
(3) The inside of the heating furnace was kept at 600°C for 360 min to carry out pre-firing.
(4) After pre-firing, temperature inside the heating furnace was raised from 600°C to 925°C in 130 min.
(5) The inside of the heating furnace was kept at 925°C for 60 min to carry out main firing.
(6) After main firing, temperature inside the heating furnace was lowered from 925°C to 250°C in 135 min.
(7) The alumina crucible was removed from the heating furnace at 250°C and left to cool in a dry atmosphere outside the furnace to reach 25°C in 10 min.

### 1.3 Example 3

A composite was obtained in the same manner as in Example 1. The obtained composite was loaded into an alumina crucible and fired in an ambient air atmosphere, and the fired product after cooling was crushed in a dry atmosphere to obtain a Na-containing oxide having a P2-type structure. The firing conditions are as stated in the following (1) to (7).
(1) An alumina crucible containing the above composite was set in a heating furnace having an ambient air atmosphere.
(2) Temperature inside the heating furnace was raised from room temperature (25°C) to 600°C in 115 min.
(3) The inside of the heating furnace was kept at 600°C for 360 min to carry out pre-firing.
(4) After pre-firing, temperature inside the heating furnace was raised from 600°C to 900°C in 120 min.
(5) The inside of the heating furnace was kept at 900°C for 60 min to carry out main firing.
(6) After main firing, temperature inside the heating furnace was lowered from 900°C to 250°C in 130 min.
(7) The alumina crucible was removed from the heating furnace at 250°C and left to cool in a dry atmosphere outside the furnace to reach 25°C in 10 min.

### 1.4 Comparative Example 1

Precursor particles were obtained in the same manner as in Example 1. The precursor particles and Na₂CO₃ were weighed so as to obtain a composition of Na_{0.7}Mn_{0.5}Ni_{0.2}Co_{0.3}O₂. The weighed precursor and Na₂CO₃ were mixed using a mortar, whereby a composite was obtained. In the composite, 24% by area of surfaces of the precursor particles were covered with Na₂CO₃. The obtained composite was loaded into an alumina crucible and fired in an ambient air atmosphere, and the fired product after cooling was crushed in a dry atmosphere to obtain a Na-containing oxide having a P2-type structure. The firing conditions were as stated in the following (1) to (7).
(1) An alumina crucible containing the above composite was set in a heating furnace having an ambient air atmosphere.
(2) Temperature inside the heating furnace was raised from room temperature (25°C) to 600°C in 115 min.
(3) The inside of the heating furnace was kept at 600°C for 360 min to carry out pre-firing.
(4) After pre-firing, temperature inside the heating furnace was raised from 600°C to 900°C in 120 min.
(5) The inside of the heating furnace was kept at 900°C for 720 min to carry out main firing.
(6) After main firing, temperature inside the heating furnace was lowered from 900°C to 250°C in 130 min.
(7) The alumina crucible was removed from the heating furnace at 250°C and left to cool in a dry atmosphere outside the furnace to reach 25°C in 10 min.

### 1.5 Example 4

### 1.5.1 Production of precursor

(1) MnSO₄·5H₂O and FeSO₄·7H₂O were weighed to a target compositional ratio and dissolved in distilled water to a concentration of 1.2 mol/L to obtain a first solution. In a separate container, Na₂CO₃ was dissolved in distilled water to a concentration of 1.2 mol/L to obtain a second solution.
(2) 1000 mL of pure water was loaded into a reactor (with baffles), and 500 mL of the first solution and 500 mL of the second solution were each added therein dropwise at a rate of about 4 mL/min.
(3) Upon completion of the dropwise addition, stirring was carried out at a stirring rate of 150 rpm at room temperature for 1 h to obtain a product.
(4) The product was washed with pure water and subjected to solid-liquid separation with a centrifugal separator to recover a precipitate.
(5) The resulting precipitate was dried overnight at 120°C and crushed with a mortar, fine particles were removed by airflow classification, and precursor particles were obtained. The precursor particles were spherical particles consisting of a composite salt comprising Mn and Fe and having a roundness of 0.86.

### 1.5.2 Production of composite

(1) Na₂CO₃ and distilled water were weighed to 1150 g/L and then stirred to complete dissolution using a stirrer to produce a Na₂CO₃ aqueous solution.
(2) The above Na₂CO₃ aqueous solution and the above precursor particles were weighed and mixed so as to obtain a composition of Na_{0.7}Mn_{0.5}Fe_{0.5}O₂ after the firing described below to obtain a slurry.
(3) The above slurry was airflow-dried by spray drying to obtain a composite. Specifically, using a spray drying apparatus DL410, under the conditions of a slurry feed rate of 30 mL/min, an inlet temperature of 200°C, a circulating air volume of 0.8 m³/min, and a spraying air pressure of 0.3 MPa, the above slurry was airflow-dried and surfaces of the precursor particles were covered with Na₂CO₃ to obtain a composite. In the composite, 77% by area of the surfaces of the precursor particles were covered with Na₂CO₃.

### 1.5.3 Firing of composite

The composite was loaded into an alumina crucible and fired in an ambient air atmosphere, and the fired product after cooling was crushed in a dry atmosphere to obtain a Na-containing oxide having a P2-type structure. The firing conditions were the same as conditions (1) to (7) in Example 3. Specifically, heating inside furnace (raising temperature from 25°C to 600°C in 115 min), pre-firing inside furnace (maintaining at 600°C for 360 min), heating inside furnace (raising temperature from 600°C to 900°C in 120 min), main firing inside furnace (maintaining at 900°C for 60 min), cooling inside furnace (lowering temperature from 900°C to 250°C in 130 min), and leaving to cool outside furnace (lowering temperature from 250°C to 25°C in 10 min) were carried out to obtain a Na-containing oxide having a P2-type structure.

### 1.6 Comparative Example 2

Precursor particles were obtained in the same manner as Example 4. The precursor particles and Na₂CO₃ were weighed so as to obtain a composition of Na_{0.7}Mn_{0.5}Fe_{0.5}O₂. The weighed precursor and Na₂CO₃ were mixed using a mortar, whereby a composite was obtained. In the composite, 26% by area of surfaces of the precursor particles were covered with Na₂CO₃. The obtained composite was subjected, under the same conditions (1) to (7) as in Comparative Example 1, to heating inside furnace (raising temperature from 25°C to 600°C in 115 min), pre-firing inside furnace (maintaining at 600°C for 360 min), heating inside furnace (raising temperature from 600°C to 900°C in 120 min), main firing inside furnace (maintaining at 900°C for 720 min), cooling inside furnace (lowering temperature from 900°C to 250°C in 130 min), and leaving to cool outside furnace (lowering temperature from 250°C to 25°C in 10 min), and the fired product after cooling was crushed in a dry atmosphere to obtain a Na-containing oxide having a P2-type structure.

### 2. Evaluation of positive electrode active material

### 2.1 Elemental analysis

Elemental analysis was carried out on the positive electrode active material in each of Examples 1 to 4 and Comparative Examples 1 and 2 to identify the chemical composition thereof. The results are shown in Table 1 below.

### 2.2 Identification of crystal structure by X-ray diffraction measurement

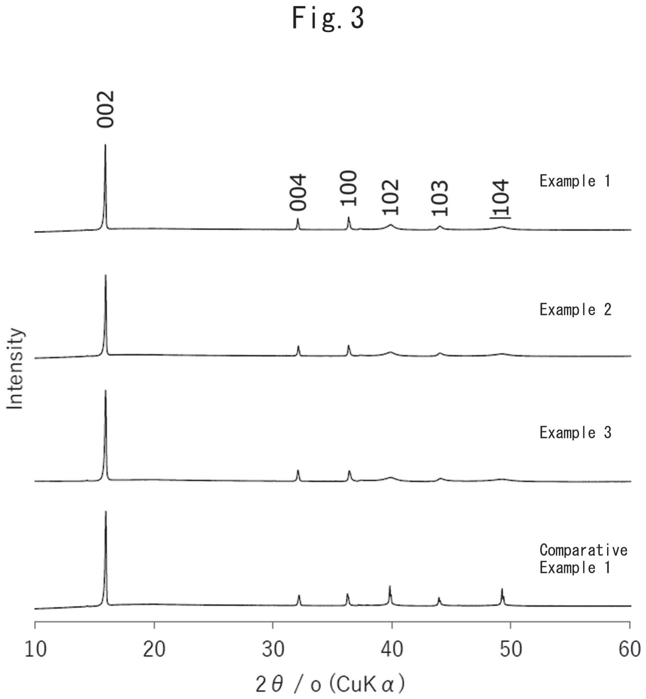

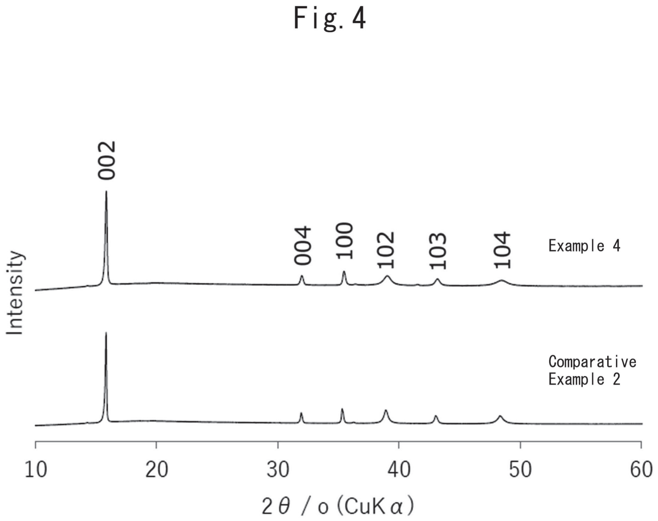

For each of the positive electrode active materials of Examples 1 to 4 and Comparative Examples 1 and 2, X-ray diffraction measurement was carried out using CuKα as a radiation source to acquire an X-ray diffraction pattern. FIG.3 shows the X-ray diffraction pattern of each of Examples 1 to 3 and Comparative Example 1. FIG. 4 shows the X-ray diffraction pattern of each of Example 4 and Comparative Example 2. As shown in FIGS. 3 and 4, it was found that all of the positive electrode active materials of Examples 1 to 4 and Comparative Examples 1 and 2 had a P2-type structure belonging to space group P63mc. In addition, as shown in FIG. 3, it was found that in the positive electrode active materials according to Examples 1 to 3, compared to the positive electrode active material according to Comparative Example 1, the X-ray diffraction peak intensities originating from the (102) plane were decreased, and thus stacking faults were introduced in the (102) plane. Further, as shown in FIG. 4, it was found that the positive electrode active material according to Example 4, compared to the positive electrode active material according to Comparative Example 2, the X-ray diffraction peak intensity originating from the (102) plane was decreased, thus stacking faults were introduced in the (102) plane. For each of Examples 1 to 4 and Comparative Examples 1 and 2, the ratio I₁/I₂ of X-ray diffraction peak intensity I₁ originating from the (102) plane of the P2-type structure to X-ray diffraction peak intensity I₂ originating from the (002) plane of the P2-type structure, the ratio I₁/I₃ of the X-ray diffraction peak intensity I₁ to X-ray diffraction peak intensity I₃ originating from the (100) plane of the P2-type structure, and the half-width HW₁ of the X-ray diffraction peak originating from the (102) plane are shown in Table 1 below.

### 3. Production of evaluation cell

The positive electrode active material in each of Examples 1 to 4 and Comparative Examples 1 and 2 was used to produce a coin cell. The production procedure of the coin cell was as follows.
(1) A positive electrode active material, acetylene black (AB) as a conductive aid, and polyvinylidene fluoride (PVdF) as a binder were weighed so as to have a mass ratio of positive electrode active material : AB : PVdF = 85:10:5, and dispersed and mixed in N-methyl-2-pyrrolidone to obtain a positive electrode mixture slurry. The positive electrode mixture slurry was applied on an aluminum foil and vacuum-dried overnight at 120°C to obtain a positive electrode that was a laminate of a positive electrode active material layer and a positive electrode current collector.
(2) An electrolytic solution in which NaPF₆ was dissolved in a mixed solvent of EC and DEC at a volume ratio of 1:1 to a concentration of 1 M was used.
(3) A metallic sodium foil was prepared as a negative electrode.
(4) The positive electrode, the electrolytic solution, and the negative electrode were used to produce a coin cell (CR2032).

### 4. Evaluation of charging and discharging characteristics

(1) Each of the coin cells of Examples 1 to 3 and Comparative Example 1 was charged and discharged at a voltage range of 1.0 to 4.5 V and at 0.1 C (1 C = 160 mA/g) in a thermostatic chamber maintained at 25°C, and the reversible capacity was measured. Results are shown in Table 1 below.
(2) Each of the coin cells of Example 4 and Comparative Example 2 was charged and discharged at a voltage range of 1.0 to 4.3 V and at 0.1 C (1 C = 190 mA/g) in a thermostatic chamber maintained at 25°C, and the reversible capacity was measured. Results are shown in Table 1 below.

### 5. Evaluation results

For each of Examples 1 to 4 and Comparative Examples 1 and 2, the I₁/I₂, I₁/I₃, and half-width HW₁ identified from X-ray diffraction pattern and the reversible capacity of the evaluation cell are shown.

**(Table 1)**

| | Chemical composition | I₁/I₂ | I₁/I₃ | HW₁ [°] | Reversible capacity [mAh/g] |
|---|---|---|---|---|---|
| Example 1 | Na0.65Mn0.54Ni0.17Co0.29O2 | 0.06 | 0.63 | 0.61 | 174 |
| Example 2 | Na0.66Mn0.54Ni0.17Co0.29O2 | 0.05 | 0.35 | 0.87 | 179 |
| Example 3 | Na0.67Mn0.54Ni0.17Co0.29O2 | 0.03 | 0.24 | 0.92 | 185 |
| Comparative Example 1 | Na0.70Mn0.50N10.19Co0.31O2 | 0.43 | 1.77 | 0.08 | 164 |
| Example 4 | Na0.71Fe0.52Mn0.48O2 | 0.10 | 0.60 | 0.71 | 209 |
| Comparative Example 2 | Na0.71Fe0.52Mn0.48O2 | 0.14 | 0.74 | 0.36 | 175 |

As is clear from the results shown in Table 1, the positive electrode active materials according to Examples 1 to 3, in which I₁/I₂ and I₁/I₃ are relatively small and stacking faults in the (102) plane of the P2-type structure are relatively numerous, each have a larger reversible capacity than the positive electrode active material according to Comparative Example 1, in which I₁/I₂ and I₁/I₃ are relatively large and stacking faults in the (102) plane of the P2-type structure are relatively few. The same applies to Example 4 and Comparative Example 2, in which the transition metal species differ from those in Examples 1 to 3 and Comparative Example 1.

### 6. Supplemental

Although cases where the precursor was obtained by a coprecipitation method were exemplified in the above Examples, the precursor can be obtained by other methods. In addition, although cases where a Na source was applied to surfaces of the precursor by spray drying to obtain a composite were exemplified in the above Examples, the composite can be obtained by other methods. Further, although as the Na-containing oxide having a P2-type structure, those having predetermined chemical compositions were exemplified in the above Examples, the chemical composition of the Na-containing oxide is not limited thereto. Furthermore, the Na-containing oxide may be doped with an element M other than Mn, Ni, and Co. The element M is as described in the embodiments.

### 7. Conclusion

As described above, it can be said that in the positive electrode active material comprising a Na-containing oxide, when the Na-containing oxide satisfies the following requirements (1) to (4), the reversible capacity of the positive electrode active material is increased.
(1) The Na-containing oxide has a P2-type structure.
(2) The Na-containing oxide at least comprises, as constituent elements, at least one element among Mn, Ni, and Co; Na; and O.
(3) An X-ray diffraction pattern of the Na-containing oxide satisfies I₁/I₂ ≤ 0.10.
(4) The X-ray diffraction pattern of the Na-containing oxide satisfies I₁/I₃ ≤ 0.70.

The I₁ is an X-ray diffraction peak intensity originating from the (102) plane of the P2-type structure, the I₂ is an X-ray diffraction peak intensity originating from the (002) plane of the P2-type structure, and the I₃ is an X-ray diffraction peak intensity originating from the (100) plane of the P2-type structure.

### REFERENCE SIGNS LIST

- 100: sodium-ion secondary battery
- 10: positive electrode active material layer
- 20: electrolyte layer
- 30: negative electrode active material layer
- 40: positive electrode current collector
- 50: negative electrode current collector

## Claims

1. A positive electrode active material, comprising a Na-containing oxide, wherein
the Na-containing oxide has a P2-type structure,
the Na-containing oxide comprises, as constituent elements,
at least one element among Mn, Ni, and Co;
Na; and
O,
an X-ray diffraction pattern of the Na-containing oxide satisfies I₁/I₂ ≤ 0.10,
the X-ray diffraction pattern of the Na-containing oxide satisfies I₁/I₃ ≤ 0.70,
the I₁ is an intensity of an X-ray diffraction peak originating from (102) plane of the P2-type structure,
the I₂ is an intensity of an X-ray diffraction peak originating from (002) plane of the P2-type structure, and
the I₃ is an intensity of an X-ray diffraction peak originating from (100) plane of the P2-type structure.

2. The positive electrode active material according to claim 1, wherein
the X-ray diffraction pattern of the Na-containing oxide satisfies 0.01 ≤ I₁/I₂ ≤ 0.10, and
the X-ray diffraction pattern of the Na-containing oxide satisfies 0.01 ≤ I₁/I₃ ≤ 0.70.

3. The positive electrode active material according to claim 1 or 2, wherein
the X-ray diffraction pattern of the Na-containing oxide satisfies 0.40° ≤ HW₁, and
the HW₁ is a half-width of the X-ray diffraction peak originating from the (102) plane of the P2-type structure.

4. The positive electrode active material according to claim 3, wherein
the X-ray diffraction pattern of the Na-containing oxide satisfies 0.40° ≤ HW₁ ≤ 1.00°.

5. The positive electrode active material according to any one of claims 1 to 4, wherein
the Na-containing oxide has a chemical composition represented by NaₐMnₓ₋ₚNi_{y-q}Co_{z-r}M_{p+q+r}O₂ (where 0 < a ≤ 1.00; x + y + z = 1; and 0 ≤ p + q + r < 0.17, and the element M is at least one selected from B, Mg, Al, K, Ca, Ti, V, Cr, Fe, Cu, Zn, Ga, Ge, Sr, Y, Zr, Nb, Mo, and W).

6. The positive electrode active material according to any one of claims 1 to 5, wherein
the Na-containing oxide comprises, as constituent elements, at least Na, Mn, Ni, Co, and O.

7. The positive electrode active material according to any one of claims 1 to 4, wherein
the Na-containing oxide comprises, as constituent elements, at least Na, Mn, Fe, and O.

8. A sodium-ion secondary battery, comprising a positive electrode active material layer, an electrolyte layer, and a negative electrode active material layer, wherein
the positive electrode active material layer comprises the positive electrode active material according to any one of claims 1 to 7.
